# EUROPÄISCHE PATENTSCHRIFT

(11) **EP 4 438 158 B1**
(45) Veröffentlichungstag und Bekanntmachung des Hinweises auf die Patenterteilung: **04.03.2026**
(21) Anmeldenummer: 23164329.7
(22) Anmeldetag: 27.03.2023
(51) Int. Cl.: B01D 46/12, B01D 46/52, B01D 46/64, B01D 46/00

(54) **FRISCHLUFTSYSTEM MIT LUFTFILTERANORDNUNG SOWIE VERFAHREN ZUM AUSWECHSELN MEHRERER FILTERELEMENTE**
FRESH AIR SYSTEM WITH AIR FILTER ASSEMBLY AND METHOD FOR REPLACING MULTIPLE FILTER ELEMENTS
SYSTÈME D'AIR FRAIS AVEC ENSEMBLE FILTRE À AIR ET PROCÉDÉ DE REMPLACEMENT D'UNE PLURALITÉ D'ÉLÉMENTS FILTRANTS

(43) Veröffentlichungstag der Anmeldung: 02.10.2024
(73) Patentinhaber: Joseph Vögele AG, 67067 Ludwigshafen (DE)
(72) Erfinder: Erdtmann, Bernhard, 68535 Edingen Neckarhausen (DE); Weber, Stefan, 67127 Rödersheim-Gronau (DE); Pontius, Johannes, 66839 Schmelz (DE); Riffel, Jan, 68307 Mannheim (DE); Kempf, Felix, 68159 Mannheim (DE)
(74) Vertreter: Grünecker Patent- und Rechtsanwälte PartG mbB

(56) Entgegenhaltungen:
- EP-A1- 3 520 878
- EP-A1- 4 056 759
- DE-A1- 102013 011 457
- DE-A1- 102014 004 220
- DE-U- 6 751 726
- US-A- 4 961 764

## Beschreibung

Die vorliegende Erfindung bezieht sich auf ein Frischluftsystem gemäß Anspruch 1 sowie auf ein Verfahren zum Auswechseln einer Vielzahl gebrauchter Filterelemente gemäß Anspruch 12.

In der nachveröffentlichten, europäischen Patentanmeldung EP 4 306 717 A1 wird für einen Straßenfertiger eine Frischlufteinrichtung mit einer daran befestigten Filtereinheit beschrieben, die zum Reinigen eines bitumenhaltigen Volumenstroms ausgebildet ist. Die Filtereinheit verfügt über ein Filtergehäuse sowie mehrere Filterelemente, die einzeln, in einer vorbestimmten Reihenfolge hintereinander im Filtergehäuse aufgenommen sind. Bei einem derartigen mehrteiligen Aufbau ist ein Wechsel der Filterelemente mit relativ hohem Aufwand verbunden. Beim Filterwechsel muss nämlich zunächst das Filtergehäuse mit dafür geeignetem Werkzeug geöffnet werden. Dann müssen die jeweiligen Filterelemente Stück für Stück, sprich einzeln nacheinander ausgebaut und entsorgt werden. Des Weiteren ist es vor dem Einbau neuer Filterelemente oftmals nötig, das Filtergehäuse, insbesondere darin vorgesehene Aufnahmen für die jeweiligen Filterelemente, zu reinigen. Danach können die neuen Filterelemente einzeln nacheinander eingebaut werden, um schließlich das Gehäuse zu verschließen. In Summe ergeben sich daher mehrere Arbeitsschritte, die auf der Baustelle den eigentlichen Einbauprozess aufhalten. Die dafür benötigte Zeit führt insbesondere zu unerwünschten Stillstandzeiten auf der Baustelle, wodurch es zu einer Abkühlung des Einbaumaterials kommen kann. Durch die Handhabe des vorangehend beschriebenen Filterwechselvorgangs kommt es auch vor, dass die neuen Filterelemente in einer falschen Reihenfolge in das Gehäuse eingebaut werden, wodurch nicht mehr der gewünschte Filtereffekt erzielbar ist. Beim Verbau mehrerer einzelner Filterelemente besteht vor allem das Risiko, dass ein eigentlich als nachgeordnete Filterstufe vorgesehener Feinpartikelfilter versehentlich als Vorfilter, d.h. als Eingangsfilterstufe, verbaut wird. An dieser Stelle kann sich an der Oberfläche des Feinpartikelfilters leicht ein Filterkuchen ausbilden, wodurch der Ansaugweg verstopften kann. Eine verkehrte Reihenfolge der Filterelemente kann daher auch einen negativen Einfluss auf die mit der Filtereinheit verbundene Ventilatoreinheit haben.

DE 10 2014 004 220 A1, EP 3 520 878 A1 sowie DE 10 2013 011 457 A1 offenbaren für den Einsatz in Fahrzeugkabinen Luftfilteranordnungen, die aus mehreren Filterlagen bestehen.

US 4 961 764 A offenbart eine Luftfilteranordnung, die an einer Auslassöffnung eines Ventilatorgehäuses befestigt ist.

EP 4 056 759 A1 offenbart eine Absaugeinrichtung, die an einem Straßenfertiger vorgesehen ist, um bitumenhaltige Dämpfe aus einem Bereich der Querverteilung abzusaugen.

DE 67 51 726 U offenbart ein transportables Absaug- und Filtergerät mit einer aus separaten Filtern gebildeten Luftfilteranordnung, die mittels eines Gehäuseaufbaus getragen wird.

Aufgabe der Erfindung ist es, für den Baustelleneinsatz im Hinblick auf die vorangehend beschriebene Problematik ein mit reduziertem Wartungsaufwand betreibbares, energieeffizientes Frischluftsystem samt einer besser handhabbaren Luftfilteranordnung zur Verfügung zu stellen.

Diese Aufgabe wird gelöst anhand eines Frischluftsystems gemäß Anspruch 1 sowie mittels eines Verfahrens gemäß Anspruch 12.

Vorteilhafte Weiterbildungen der Erfindung sind durch die jeweiligen Gegenstände der Unteransprüche gegeben.

Die Erfindung betrifft ein Frischluftsystem mit einer Luftfilteranordnung zur Reinigung eines bitumenhaltigen Volumenstroms, wobei die Luftfilteranordnung mindestens ein erstes Filterelement und mindestens ein zweites Filterelement umfasst, die als nacheinander wirkende Filterelemente zur Reinigung des bitumenhaltigen Volumenstroms angeordnet sind. Erfindungsgemäß sind das erste Filterelement und das zweite Filterelement fest miteinander verbunden. Dadurch liegt eine feste Verbindung von mehreren Filterelementen zu einer Filtereinheit vor. Eine solche Filtereinheit kann auf einer Straßenbaustelle an einer Frischlufteinrichtung vorteilhaft zum Einsatz kommen, um in mehreren Filterstufen bitumenhaltige Dämpfe und/oder Aerosole aus der Luft zu filtern und um den daraus gewonnenen, gereinigten Luftstrom als Frischluft an einem Arbeitsplatz zur Verfügung zu stellen. Zwischen den beiden Filterelementen ist erfindungsgemäß eine Verbindung hergestellt, durch welche die beiden Filterelemente mit einer vorbestimmten Haltekraft zusammengehalten werden. Die beiden Filterelemente liegen somit nicht als separate Einzelteile getrennt vor, sondern bilden gemeinsam eine untrennbare Einheit aus. Dadurch lassen sich die beiden Filterelemente, die ggf. verschiedene Filtereigenschaften mit sich bringen, am Stück aus- und einbauen.

In der Luftfilteranordnung liegen die beiden Filterelemente nicht als in Reihe hintereinander arrangierte Einzelfilter in separater Form vor. Vielmehr bildet die erfindungsgemäße Luftfilteranordnung einen zusammenhängenden Verbund aus einzelnen Filterelementen aus. Dadurch sind die jeweiligen Filterelemente gemeinsam besser handhabbar, lassen sich insbesondere am Stück ausbauen und können durch neue, erfindungsgemäß zusammengefügte Filterelemente mit wenig Aufwand ersetzt werden. Damit lässt sich auf der Baustelle die Zeit für einen Filterwechsel reduzieren und macht den Filterwechsel insgesamt einfacher und weniger fehleranfällig.

Dadurch, dass an der Luftfilteranordnung die beiden Filterelemente fest miteinander verbunden sind, ergibt sich insgesamt auch eine kompakte Bauweise der Luftfilteranordnung. Eine solche einteilige, aus mehreren Filterelementen zusammengefügte Luftfilteranordnung kann vor allem an schwer zugänglichen Stellen, beispielsweise hinterhalb eines Bedienpults oder über Kopf besser installiert werden.

Vorzugsweise sind die beiden Filterelemente durch eine stoffschlüssige, formschlüssige und/oder kraftschlüssige Verbindung miteinander verbunden. Denkbar wäre es, die beiden Filterelemente an deren einander zugewandten, äußeren Rändem durch Verschmelzen sowie durch daraus resultierende intermolekulare oder chemische Bindungskräfte, gegebenenfalls über Zusatzstoffe, miteinander zu verbinden. Insbesondere käme dafür eine die Filterelemente zusammenfügende Schweiß-, Löt- oder Klebverbindung in Frage. Vorzugsweise sind das erste Filterelement und das zweite Filterelement miteinander verklebt. Dadurch können die beiden Filterelemente eine robuste Einheit ausbilden.

Eine Variante sieht vor, dass einander zugewandte, außen ausgebildete Ränder der jeweiligen Filterelemente ringsum luftdicht miteinander verklebt sind. Derart verklebte Trennstellen zwischen den Filterelementen brauchen keine weitere Abdichtung vorsehen. Eine dafür aufgebrachte Klebebahn kann die beiden Filterelemente derart zusammengehalten, dass sie sich nur durch Zerstörung der Klebebahn trennen lassen.

Insbesondere ist durch außenliegende Wände der zusammengefügten Filterelemente zumindest bereichsweise eine luftdichte Ummantelung gebildet. Diese Ummantelung erfüllt die Funktion eines Filtergehäuses, sodass zur Anbringung der Luftfilteranordnung kein separates Gehäuse benötigt wird. Dies bedeutet, dass die beiden Filterelemente durch deren zusammengesetzte Mantelfläche ein Gehäuse der Luftfilteranordnung ausbilden.

Denkbar wäre es, dass die Luftfilteranordnung insgesamt als einteiliges Aufsteckmodul zur werkzeuglosen Anbringung an einer Ventilatoreinheit konfiguriert ist. Insbesondere liegt die Luftfilteranordnung als eine aus mehreren Filterelementen zusammengefasste, in sich stabile Filtereinheit vor, die ohne gesondertes Filtergehäuse auskommt. Dabei können die äußeren Wände der zusammengefügten Filterelemente selbst das Gehäuse der Luftfilteranordnung ausbilden. Damit reduziert sich der Reinigungsaufwand auf der Baustelle, da gesonderte Gehäuseaufbauten, insbesondere Gehäuse zur Aufnahme von einzelnen Filterelementen, immer eine Fläche für Verunreinigungen bieten. Ein derartiges Aufsteckmodul kann insbesondere als Einwegartikel vorliegen.

Gemäß einer Ausführungsform der Erfindung weist das erste Filterelement und/oder das zweite Filterelement ein zickzackförmiges, wellenförmiges, rechteckförmiges, noppenförmiges und/oder pyramidenförmiges Filtergewebe auf. Damit lässt sich die Filterfläche des bzw. der Filterelemente vergrößern. Vorstellbar wäre es, dass das erste Filterelement und/oder das zweite Filterelement eine Filterfläche ausbildet, die als ein mit Höhen und Tiefen versehenes Filterprofil vorliegt. Im zusammengebauten Zustand beider Filterelemente können die jeweiligen Profile derart zueinander ausgerichtet sein, dass deren Höhen und Tiefen im Versatz zueinander vorliegen. Denkbar wäre es, dass das Filterprofil in Form eines Noppenprofils oder eines Pyramidenprofils ausgebildet ist. Eine besonders große Filterfläche, trotz begrenztem Bauraum, wird dadurch erreicht, wenn beide Filterelemente ein zickzackförmiges, wellenförmiges, rechteckförmiges Filtergewebe und/oder vorangehend beschriebenes Filterprofil aufweisen. Das Filtern von Aerosolen aus dem sie durchquerenden, bitumenhaltigen Volumenstrom kann insbesondere dann zuverlässig durch die beiden Filterelemente geschehen, wenn deren einander zugewandte Filterstrukturen in Richtung des Volumenstroms lageversetzt zueinander ausgerichtet sind. Dadurch kann nämlich der Filtereffekt maximiert werden, insbesondere lassen sich damit nicht vom ersten Filterelement gebundene Aerosole jedenfalls durch das dahinter positionierte Filterelement binden.

Zusätzlich lässt sich die Filtereigenschaft dadurch verbessern, wenn das erste Filterelement und/oder das zweite Filterelement ein Aktivkohlefilter ist. Mittels in den Filterelementen enthaltener Aktivkohle lassen sich Aerosole besonders wirksam binden.

Eine vorteilhafte Filtration des bitumenhaltigen Volumenstroms ergibt sich dadurch, dass die beiden Filterelemente gleiche Filterelemente sind, sprich vergleichbare Filtereigenschaften aufweisen, beispielsweise zwei zusammengefügte, zickzackförmige Aktivkohlefilter. Dadurch ergeben sich auch Vorteile für das Recycling.

Zweckmäßig wäre es, wenn die Luftfilteranordnung ein drittes Filterelement als Vorfilter umfasst, welches mit dem ersten und dem zweiten Filterelement fest oder lösbar verbunden ist, vorzugsweise mit diesen verklebt ist. Unabhängig davon, ob der Vorfilter fest oder lösbar mit den beiden Filterelementen verbunden ist, lässt er sich gemeinsam mit dem ersten und dem zweiten Filterelement am Stück aus- und einbauen. Eine solche dreischichtig gebildete Luftfilteranordnung spart bei einem Filterwechsel noch mehr Zeit, wenn sie beim Ein- und Ausbau am Stück handhabbar ist. Vor allem wird dadurch der Filterwechsel an schwer zugänglichen Stellen, beispielsweise hinterhalb oder unterhalb einer Konsole erleichtert.

Eine robuste Einheit aus den drei einzelnen Filterelementen kommt insbesondere dadurch zustande, dass diese Filterelemente miteinander verklebt sind. Ein derartiger Dreischichtenklebeverbund aus jeweiligen Filterelementen kann am Stück an einer Ventilatoreinheit befestigt werden. Denkbar wäre es jedoch, dass das dritte Filterelement für einen nachhaltigen Einsatz lösbar mit den anderen beiden Filterelementen gekoppelt ist, sodass das als Vorfilter eingesetzte dritte Filterelement ggf. früher austauschbar ist als die anderen beiden Filterelemente.

Eine Variante sieht vor, dass das dritte Filterelement eine glatte Oberfläche aufweist. Damit kann das als Vorfilter eingesetzte, dritte Filterelement gut gesäubert werden. Bspw. lässt sich ein auf der glatten Oberfläche angesammelter Film an groben Partikeln, in Fachkreisen Filterkuchen genannt, problemlos von der glatten Oberfläche abwischen. Denkbar wäre es, dass das dritte Filterelement ein Schaumstofffilter ist. Ein solches Filterelement kann sehr gut als Grobpartikelfilter an vorderster Stelle der Luftfilteranordnung eingesetzt werden. Alternativ zu einem Schaumstofffilter käme auch ein Vliesfilter in Frage.

Gemäß einer Ausführungsform der Erfindung liegen die jeweiligen Filterelemente als übereinander angeordnete Filterschichten vor. Die Luftfilteranordnung weist demnach einen schichtartigen Aufbau aus mehreren Filterelementen auf, wodurch sich eine kompakte Bauweise ergibt. Insbesondere können die jeweiligen Filterelemente in Form von übereinander angeordneten Filtermatten vorliegen.

Bevorzugterweise bildet die Luftfilteranordnung eine Eingangsseite und eine Ausgangsseite aus, wobei an der Eingangsseite und/oder an der Ausgangsseite ein Dichtelement vorgesehen ist. Das Dichtelement ermöglicht es, dass die Luftfilteranordnung abdichtend an einer Ventilatoreinheit befestigbar ist. Das Dichtelement liegt insbesondere als Gummilippe bzw. Gummiwulst vor und kann auf dem Rand des außen positionierten Filterelements, insbesondere auf dem Rand des außen positionierten, zickzackförmigen Aktivkohlefilters, aufgeklebt sein. Bei einer runden Filterform kann das Dichtelement als Gummiring vorliegen.

Vorzugsweise ist das Dichtelement in Form eines Einrastelements zur werkzeuglosen Anbringung an ein Ventilatorgehäuse ausgebildet. Das Dichtelement hat bei dieser Variante gleichzeitig die Funktion, als Befestigungsmittel zur Anbringung der Luftfilteranordnung zu dienen.

Eine Variante sieht vor, dass das Dichtelement einen sich verjüngenden Wulst ausbildet, der als Dichtlippe gegen eine Gehäuseoberfläche einer Ventilatoreinheit drückbar ist. Das Dichtelement kann einen als Rastmittel konfigurierten Vorsprung ausbilden, der sich auf Zug an einem Gehäusevorspruch der Ventilatoreinheit halten lässt. Denkbar wäre es, dass das Dichtelement durch Presspassung auf das die Ausgangsseite bildende Filterelement aufgeschoben ist, insbesondere auf den ausgangs platzierten, zickzackförmigen Aktivkohlefilter.

Eine besonders formstabile, für eine dreistufige Filtration geeignete Luftfilteranordnung ergibt sich dadurch, dass die drei miteinander verbundenen Filterelemente durch deren Zusammenbau eine Mantelfläche bilden, die als eine luftdichte Ummantelung vorliegt. Diese Ummantelung kann aus demselben Material hergestellt sein wie ein zur Verklebung der jeweiligen Filterelemente eingesetztes Material. Eine derartige Ummantelung dient gleichzeitig als Wetterschutz, sorgt quasi dafür, dass sich in den Filterelementen keine wetterbedingte Feuchtigkeit ansammelt. Eine durch die zusammengefügten Mantelflächen der drei Filterelemente gebildete Ummantelung bildet gleichzeitig einen Strömungskanal für die angesaugte bzw. durchgeblasene bitumenhaltige Luft. Denkbar wäre es, dass die luftdichte Ummantelung durch eine äußere Gewebestruktur der Filterelemente zustande kommt. Die äußeren Wände der Filterelemente weisen dabei eine Gewebestruktur mit hoher Dichtigkeit auf, können allerdings im Wesentlichen aus demselben Gewebematerial wie die Filterstruktur gebildet sein.

Gemäß einer Ausführungsform liegt ein außen ausgebildeter, verlängerter Wandabschnitt des mittleren Filterelements als Aufnahme für das an der Luftfilteranordnung als Vorfilter eingesetzte Filterelement vor. In dieser Aufnahme ließe sich beispielsweise ein als Vorfilter vorgesehener Schaumstofffilter unter Presspassung platzieren. Damit könnte der Vorfilter ohne stoffschlüssige Verbindung an den anderen beiden, vorzugsweise gleichartigen, Filterelementen befestigt werden und ließe sich problemlos fürs Recycling oder um einfach ersetzt zu werden, von diesen trennen. Erfindungsgemäß bilden die miteinander fest verbundenen Filterelemente gemeinsam eine selbsttragende Luftfilteranordnung aus. Gesonderte Halterungen werden deshalb zur Positionierung der Luftfilteranordnung nicht benötigt.

Die Erfindung betrifft ferner eine Ventilatoreinheit mit einem Ventilatorgehäuse, dass eine Ansaugöffnung ausbildet, an welcher eine Luftfilteranordnung lösbar befestigt ist. Die Luftfilteranordnung kann direkt an der Ansaugöffnung des Ventilatorgehäuses befestigt werden, ohne innerhalb eines Ventilator- bzw. Filtergehäuses aufgenommen zu werden. Bspw. bildet ein an der Ausgangsseite der Luftfilteranordnung angebrachtes Dichtelement ein Einrastelement aus, dass sich in eine an der Ansaugöffnung am Ventilatorgehäuse gebildete Vertiefung eindrücken lässt, um die Luftfilteranordnung mit einer gewünschten Haltekraft am Ventilatorgehäuse zu befestigen. Eine bereits durch die Montage erzielte Abdichtungswirkung kann im Betrieb durch das Ansaugen von Luft durch die Luftfilteranordnung weiter verstärkt werden, sodass die Luftfilteranordnung sicher an der Ventilatoreinheit befestigt bleibt.

Die Erfindung betrifft ein Frischluftsystem für eine Straßenbaumaschine, die in Form eines Straßenfertigers oder eines Beschickerfahrzeugs für einen Straßenfertiger vorliegt, welches mindestens eine Ventilatoreinheit mit einer daran lösbar befestigten Luftfilteranordnung aufweist. Die Luftfilteranordnung bildet eine schnell und leicht ein- und ausbaubare Einheit für ein am Straßenfertiger oder Beschickerfahrzeug vorgesehenes Frischluftsystem.

Denkbar wäre es, dass die Straßenbaumaschine eine (Fahrer-)Sitzkonsole mit einem, vorzugsweise schwenkbar gelagerten, Konsolenboden aufweist, an dessen Unterseite die Ventilatoreinheit samt daran befestigter Luftfilteranordnung angeordnet ist. Als Schwenkkonsole befindet sich der Konsolenboden im nach außen geschwenkten Zustand außerhalb einer Fahrerbedienplattform der Straßenbaumaschine, sodass sich die Luftfilteranordnung von einem darunter positionierten Bediener über Kopf im Ganzen ein- bzw. ausbauen lässt.

Denkbar wäre es, dass die Luftfilteranordnung in einem anderen Frischluftsystem der Straßenbaumaschine zum Einsatz kommt, bspw. in einem Frischluftsystem eines Bedienpults. Bspw. könnte die Luftfilteranordnung hinterhalb eines Fahrerbedienpults angeordnet sein. Auch bei dieser Anordnung ist es vorteilhaft, dass sich die erfindungsgemäße Luftfilteranordnung am Stück ein- und ausbauen lässt. Die gebrauchte Luftfilteranordnung kann dabei einfach nach unten von der Ventilatoreinheit abgezogen werden. Umgekehrt kann eine neue Luftfiltereinheit im Ganzen problemlos anstelle der gebrauchten Luftfilteranordnung an der Ventilatoreinheit aufgesteckt werden.

Ferner betrifft die Erfindung ein Verfahren zum Auswechseln einer Vielzahl gebrauchter Filterelemente eines an einem Straßenfertiger oder an einem Beschickerfahrzeug vorgesehenen Frischluftsystems, die als nacheinander wirkende Filterelemente zur Reinigung eines bitumenhaltigen Volumenstroms eingesetzt werden. Das erfindungsgemäße Verfahren sieht vor, dass die Vielzahl gebrauchter Filterelemente fest miteinander verbunden, gemeinsam ausgebaut und an deren Stelle eine Vielzahl neuer, fest miteinander verbundener Filterelemente eingebaut werden. Erfindungsgemäß lassen sich damit immer gleich mehrere Filterelemente am Stück ein- und ausbauen, brauchen deshalb nicht als Einzelteile Stück für Stück montiert zu werden bzw. ausgebaut zu werden. Dies ermöglicht einen einfachen Ein- und Ausbau mit wenigen Handgriffen innerhalb kurzer Zeit. Dadurch, dass sich beim erfindungsgemäßen Verfahren gleich mehrere Filterelemente auf einmal, sprich am Stück zusammengebaut, ein- und ausbauen lassen, lässt sich auch besser eine ordnungsgemäße Verwendung der Filterelemente bzw. ein ordnungsgemäßer Verbau der Filterelemente erreichen.

Die Erfindung wird anhand der in den folgenden Figuren gezeigten Ausführungsbeispiele genauer erläutert. Es zeigen:
- Fig. 1: eine Luftfilteranordnung gemäß der Erfindung,
- Fig. 2: eine Straßenbaumaschine in Form eines Straßenfertigers,
- Fig. 3: eine Straßenbaumaschine in Form eines Beschickerfahrzeugs für einen Straßenfertiger,
- Fig. 4: eine Sitzkonsole mit einer Frischlufteinrichtung, und
- Fig. 5: ein Bedienpult mit einer Frischlufteinrichtung.

Gleiche technische Merkmale sind in den Figuren durchgängig mit denselben Bezugszeichen versehen.

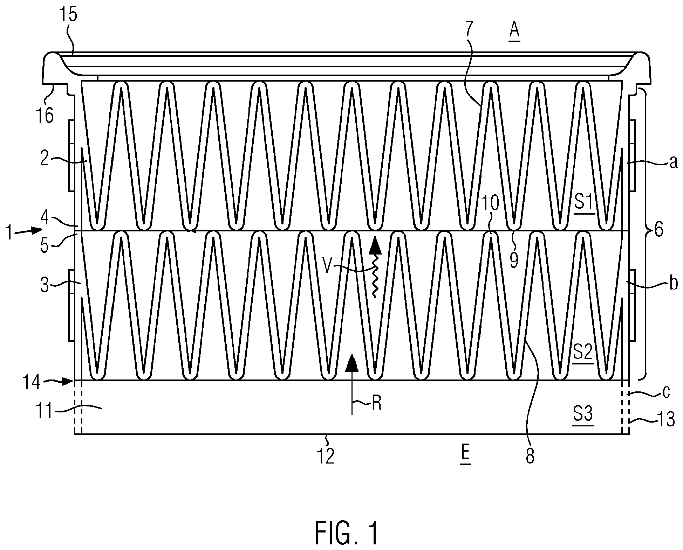

Figur 1 zeigt eine Luftfilteranordnung 1 zur Reinigung eines in Richtung R durch die Luftfilteranordnung 1 strömenden, bitumenhaltigen Volumenstroms V. Die Luftfilteranordnung 1 weist ein erstes Filterelement 2 und ein zweites Filterelement 3 auf. Das erste und das zweite Filterelement 2, 3 sind direkt übereinander angeordnet und weisen einander zugewandte, fest miteinander verbundene Ränder 4, 5 auf. Die einander zugewandten Ränder 4, 5 der beiden Filterelemente 2, 3 können bspw. luftdicht miteinander verklebt sein.

Äußere Wandabschnitte a, b der fest miteinander verbundenen beiden Filterelemente 2, 3 bilden zusammen eine luftdichte Ummantelung 6 aus. Diese Ummantelung 6 erstreckt sich im Wesentlichen über die gesamte durch die beiden Filterelemente 2, 3 geschaffene Mantelfläche.

In Figur 1 liegen die beiden Filterelemente 2, 3 jeweils als Aktivkohlefilter mit einem zickzackförmigen Filtergewebe 7, 8 vor. Einander zugewandte Spitzen 9, 10 der beiden Filterelemente 2, 3 liegen in Richtung R versetzt nebeneinander. Dies bedeutet, dass jeweilige Spitzen 9 des ersten Filterelements 2 in Strömungsrichtung R zwischen jeweiligen benachbarten Spitzen 10 des zweiten Filterelements 3 liegen und umgekehrt. Damit können Aerosole aus dem Volumenstrom V über die beiden Filterelemente 2, 3 zuverlässiger im Filtergewebe 7, 8 gebunden werden. Dies bedeutet auch, dass die beiden Filterelemente 2, 3 besser gleichmäßig verschleißen.

Figur 1 zeigt ferner, dass die Luftfilteranordnung 1 ein drittes Filterelement 11 umfasst, dass als Vorfilter an der Luftfilteranordnung 1 dient. Das dritte Filterelement 11 kann bspw. ein Schaumstofffilter mit einer glatten Oberfläche 12 sein, die sich gut reinigen lässt.

Das dritte Filterelement 11 kann lösbar oder fest mit den anderen beiden Filterelementen 2, 3 verbunden sein. Denkbar wäre es, dass das dritte Filterelement 11 in einer Aufnahme 13 durch Presspassung eingeklemmt ist, wobei die Aufnahme 13 durch einen verlängerten Wandabschnitt c des mittleren Filterelements 3 gebildet ist. Eine rein formschlüssige Befestigung des Vorfilters, beispielsweise an einem verjüngten Querschnitt des mittleren Filterelements 3, wäre alternativ dazu denkbar. Weiter alternativ dazu kann das zweite, d.h. mittlere Filterelement 3 ohne Aufnahme 13 gebildet sein und das dritte Filterelement 11 ist mit diesem entlang einer Randzone 14 verklebt.

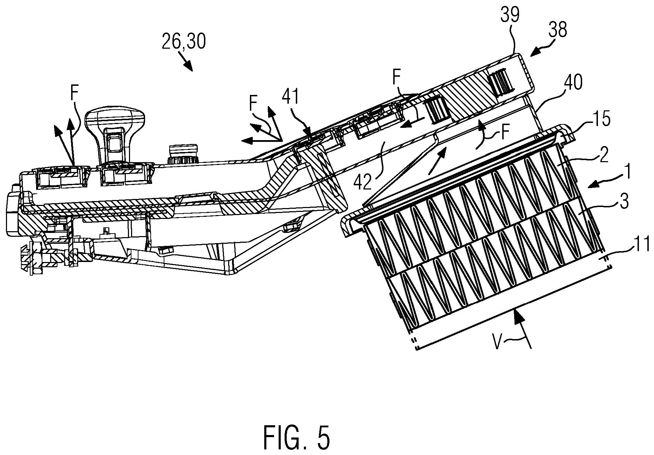

Die Luftfilteranordnung 1 verfügt ferner über ein Dichtelement 15. In Figur 1 ist das Dichtelement 15 an einer Ausgangsseite A der Luftfilteranordnung 1 vorgesehen. Denkbar wäre es, dass ein vergleichbares Dichtelement 15 an einer Eingangsseite E der Luftfilteranordnung befestigt ist. Gemäß Figur 1 liegt das Dichtelement 15 gleichzeitig als Einrastelement mit einem Vorsprung 16 vor, welcher als Einrastmittel dient, um das Dichtelement 15 an einem Ventilatorgehäuse 40 (siehe Figur 5) zu befestigen.

Gemäß Figur 1 liegen in der darin gezeigten Luftfilteranordnung 1 die jeweiligen Filterelemente 2, 3, 11 als übereinander angeordnete Filterschichten S1, S2, S3 vor. Das an unterster Stelle als Vorfilter funktionierende, dritte Filterelement 11 ist bspw. als Grobpartikelfilter konfiguriert. Die darüber angeordneten Filterschichten S1, S2 bilden jeweils Aktivkohle-Feinpartikelfilter aus. Zusammen liegen somit nacheinander wirkende Filterelemente 2, 3, 11 zur Reinigung des bitumenhaltigen Volumenstroms V in Richtung R vor.

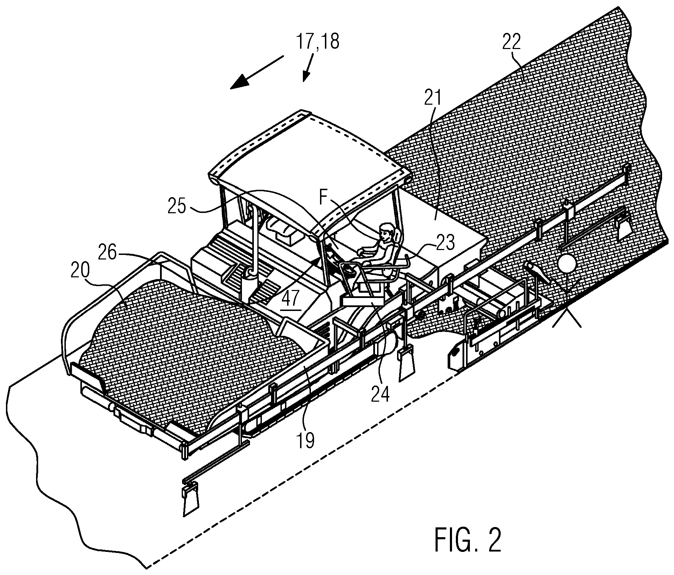

Figur 2 zeigt eine Straßenbaumaschine 17, die in Form eines Straßenfertigers 18 vorliegt. Der Straßenfertiger 18 ist dazu konfiguriert, aus einem innerhalb eines Gutbunkers 19 bevorrateten Einbaumaterial 20 mittels seiner Einbaubohle 21 eine neue Einbauschicht 22 herzustellen. Der Straßenfertiger 18 aus Figur 2 wird von einem Fahrer F gesteuert. Der Fahrer F sitzt auf einer ausgeschwenkten Fahrersitzkonsole 23, die einen ausschwenkbaren Konsolenboden 24 aufweist. In Figur 2 ist dieser Konsolenboden 24 seitlich über eine Fahrerbedienplattform 25 hinausgeschwenkt positioniert. Zum Steuern eines Betriebs des Straßenfertigers 18 verwendet der Fahrer F ein Fahrerbedienpult 26.

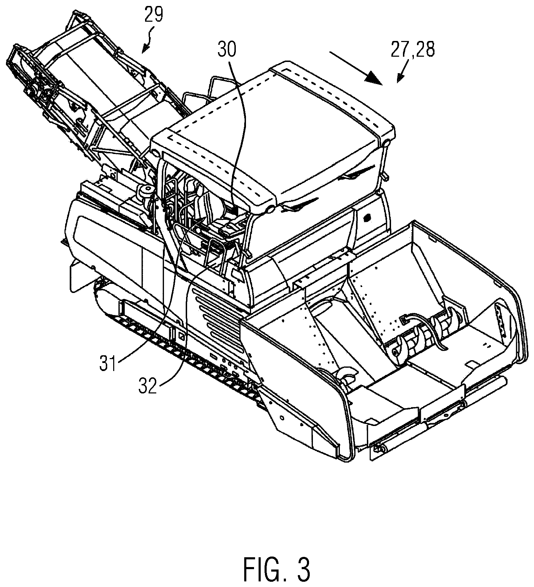

Figur 3 zeigt eine weitere Straßenbaumaschine 27, die in Form eines Beschickerfahrzeugs 28 konfiguriert ist. Ein solches Beschickerfahrzeug 28 wird in der Praxis dafür eingesetzt, einen Straßenfertiger 18 gemäß Figur 2 mit Einbaumaterial 20 zu versorgen. Dafür fährt das Beschickerfahrzeug 28 in Fahrtrichtung vor dem Straßenfertiger 18 und wirft mittels einer am Beschickerfahrzeug 28 ausgebildeten Fördereinrichtung 29 Einbaumaterial 20 in den Gutbunker 19 des ihm hinterherfahrenden Straßenfertigers 18.

Gemäß Figur 3 verfügt das Beschickerfahrzeug 28 über ein Fahrerbedienpult 30. Vor diesem ist eine Sitzkonsole 31 mit einem schwenkbar gelagerten Konsolenboden 32 positioniert. Das Fahrerbedienpult 30 ist in Figur 3 hinter einer Frontscheibe des Beschickerfahrzeugs 28 positioniert, lässt sich jedoch zusammen mit der Sitzkonsole 31 in eine Position neben dem Fahrerbedienstand bringen, das heißt über dessen Fahrerbedienplattform hinaus schwenken wie die Sitzkonsole aus 23 aus Figur 2.

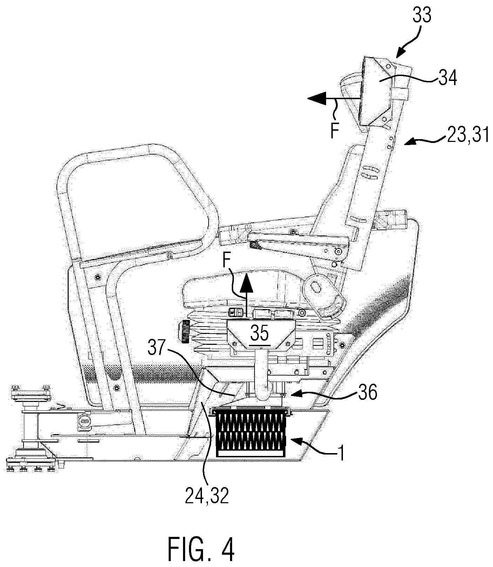

Figur 4 zeigt die (Fahrer-)Sitzkonsole 23, 31 in isolierter Darstellung. Die (Fahrer-)Sitzkonsole 23, 31 umfasst ein Frischluftsystem 33 mit mehreren Düseneinheiten 34, 35, die auf beiden Seiten der (Fahrer-)Sitzkonsole 23, 31 vorgesehen sind. Unterhalb des Konsolenbodens 24, 32 ist eine Ventilatoreinheit 36 an einer Unterseite des Konsolenbodens 24, 32 montiert. An der Ventilatoreinheit 36 ist die Luftfilteranordnung 1 befestigt. Die Ventilatoreinheit 36 sowie die Luftfilteranordnung 1 sind innerhalb einer durch den Konsolenboden 24, 32 gebildeten Stufe 37 aufgenommen.

In der in Figur 2 gezeigten ausgeschwenkten Lage der Fahrersitzkonsole 23 kann ein Bediener von unterhalb der Fahrersitzkonsole 23 über Kopf die Luftfilteranordnung 1 am Stück ausbauen und durch eine neue Luftfilteranordnung 1 ersetzen.

Figur 5 zeigt das Fahrerbedienpult 26, 30 in isolierter Darstellung mit einem daran vorgesehenen Frischluftsystem 38, das eine Ventilatoreinheit 39 aufweist, an dessen Ventilatorgehäuse 40 die Luftfilteranordnung 1 befestigt ist. Auch in dieser Lage ist der am Stück zusammenhaltende, sprich einteilige Aufbau der Luftfilteranordnung 1 für den Ein- und Ausbau sehr von Vorteil.

## Patentansprüche

1. Frischluftsystem (33, 38) für eine Straßenbaumaschine (17, 27), die in Form eines Straßenfertigers (18) oder eines Beschickerfahrzeugs (28) für einen Straßenfertiger (18) vorliegt, umfassend mindestens eine Ventilatoreinheit (36, 39) mit einem Ventilatorgehäuse (40), wobei an dem Ventilatorgehäuse (40) eine Luftfilteranordnung (1) zur Reinigung eines bitumenhaltigen Volumenstroms (V) befestigt ist, wobei die Luftfilteranordnung (1) mindestens ein erstes Filterelement (2) und ein zweites Filterelement (3) umfasst, die als nacheinander wirkende Filterelemente (2, 3) zur Reinigung des bitumenhaltigen Volumenstroms (V) angeordnet sind, und wobei die Luftfilteranordnung (1) lösbar an einer am Ventilatorgehäuse (40) gebildeten Ansaugöffnung befestigt ist, **dadurch gekennzeichnet, dass** das erste Filterelement (2) und das zweite Filterelement (3) fest miteinander verbunden sind, und dass die miteinander fest verbundenen Filterelemente (2, 3, 11) gemeinsam eine selbsttragende Luftfilteranordnung (1) ausbilden.

2. Frischluftsystem nach Anspruch 1, **dadurch gekennzeichnet, dass** das erste Filterelement (2) und das zweite Filterelement (3) durch eine stoffschlüssige, formschlüssige und/oder kraftschlüssige Verbindung miteinander verbunden sind, vorzugsweise miteinander verklebt sind.

3. Frischluftsystem nach Anspruch 1 oder 2, **dadurch gekennzeichnet, dass** das erste Filterelement (2) und/oder das zweite Filterelement (3) ein zickzackförmiges, wellenförmiges, rechteckförmiges, noppenförmiges oder pyramidenförmiges Filtergewebe (7, 8) aufweist.

4. Frischluftsystem nach einem der vorangehenden Ansprüche, **dadurch gekennzeichnet, dass** das erste Filterelement (2) und/oder das zweite Filterelement (3) ein Aktivkohlefilter ist.

5. Frischluftsystem nach einem der vorangehenden Ansprüche, **dadurch gekennzeichnet, dass** die Luftfilteranordnung (1) ein drittes Filterelement (11) als Vorfilter umfasst, welches fest oder lösbar mit dem ersten und dem zweiten Filterelement (2, 3) verbunden ist, vorzugsweise mit diesen verklebt ist.

6. Frischluftsystem nach Anspruch 5, **dadurch gekennzeichnet, dass** das dritte Filterelement (11) eine glatte Oberfläche (12) aufweist.

7. Frischluftsystem nach Anspruch 5 oder 6, **dadurch gekennzeichnet, dass** das dritte Filterelement (11) ein Schaumstofffilter oder ein Vliesfilter ist.

8. Frischluftsystem nach einem der vorangehenden Ansprüche, **dadurch gekennzeichnet, dass** die jeweiligen Filterelemente (2, 3, 11) als übereinander angeordnete Filterschichten (S1, S2, S3) vorliegen.

9. Frischluftsystem nach einem der vorangehenden Ansprüche, **dadurch gekennzeichnet, dass** die Luftfilteranordnung (1) eine Eingangsseite (E) und eine Ausgangsseite (A) ausbildet, wobei an der Eingangsseite (E) und/oder an der Ausgangsseite (A) ein Dichtelement (15) vorgesehen ist.

10. Frischluftsystem nach Anspruch 9, **dadurch gekennzeichnet, dass** das Dichtelement (15) in Form eines Einrastelements zur werkzeuglosen Anbringung an das Ventilatorgehäuse (40) ausgebildet ist.

11. Frischluftsystem nach einem der vorangehenden Ansprüche, **dadurch gekennzeichnet, dass** die miteinander fest verbundenen Filterelemente (2, 3, 11) gemeinsam eine luftdichte Ummantelung (6) ausbilden.

12. Verfahren zum Auswechseln einer Vielzahl gebrauchter Filterelemente (2,3,11) eines an einem Straßenfertiger (18) oder an einem Beschickerfahrzeug (28) vorgesehenen Frischluftsystems (33, 38), die als nacheinander wirkende Filterelemente (2, 3, 11) zur Reinigung eines bitumenhaltigen Volumenstroms (V) eingesetzt werden, **dadurch gekennzeichnet, dass** die Vielzahl gebrauchter Filterelemente (2, 3, 11) fest miteinander verbunden, gemeinsam eine selbsttragende Luftfilteranordnung (1) ausbilden, und gemeinsam von einer durch ein Ventilatorgehäuse (40) gebildeten Ansaugöffnung ausgebaut und an deren Stelle eine Vielzahl neuer, fest miteinander verbundener Filterelemente (2, 3, 11), die gemeinsam eine selbsttragende Luftfilteranordnung ausbilden, eingebaut werden.

## Claims

1. Fresh air system (33, 38) for a road paver (17, 27), which is in the form of a road paver (18) or a feeder vehicle (28) for a road paver (18), comprising at least one fan unit (36, 39) having a fan housing (40) to which an air filter arrangement (1) is fastened for cleaning a bitumen-containing volume flow (V), wherein the air filter arrangement (1) comprises at least a first filter element (2) and a second filter element (3), which are arranged as filter elements (2, 3) acting in succession for cleaning the bitumen-containing volume flow (V), and wherein the air filter arrangement (1) is detachably fastened to an intake opening formed at the fan housing (40), **characterized in that** the first filter element (2) and the second filter element (3) are firmly connected to one another, and the filter elements (2, 3, 11), which are firmly connected to one another, together form a self-supporting air filter arrangement (1).

2. Fresh air system according to claim 1, **characterized in that** the first filter element (2) and the second filter element (3) are connected to one another by a material-bonded, form-fit and/or force-fit connection, preferably glued to one another.

3. Fresh air system according to claim 1 or 2, **characterized in that** the first filter element (2) and/or the second filter element (3) has a zigzag-shaped, undulating, rectangular, nub-shaped or pyramid-shaped filter mesh (7, 8).

4. Fresh air system according to one of the preceding claims, **characterized in that** the first filter element (2) and/or the second filter element (3) is an activated carbon filter.

5. Fresh air system according to one of the preceding claims, **characterized in that** the air filter arrangement (1) comprises a third filter element (11) as a pre-filter, which is firmly or detachably connected to the first and second filter elements (2, 3), preferably glued to them.

6. Fresh air system according to claim 5, **characterized in that** the third filter element (11) has a smooth surface (12).

7. Fresh air system according to claim 5 or 6, **characterized in that** the third filter element (11) is a foam filter or a fleece filter.

8. Fresh air system according to one of the preceding claims, **characterized in that** the respective filter elements (2, 3, 11) are present as filter layers (S1, S2, S3) arranged one above the other.

9. Fresh air system according to one of the preceding claims, **characterized in that** the air filter arrangement (1) forms an inlet side (E) and an outlet side (A), wherein a sealing element (15) is provided on the inlet side (E) and/or on the outlet side (A).

10. Fresh air system according to claim 9, **characterized in that** the sealing element (15) is configured in the form of a latching element for tool-free attachment to a fan housing (40).

11. Fresh air system according to one of the preceding claims, **characterized in that** the filter elements (2, 3, 11), which are firmly connected to one another, together form an airtight coating (6).

12. Method for replacing a plurality of used filter elements (2, 3, 11) of a fresh air system (33, 38) provided on a road paver (18) or on a feeder vehicle (28), which are used as filter elements (2, 3, 11) acting in succession for cleaning a bitumen-containing volume flow (V), **characterized in that** the plurality of used filter elements (2, 3, 11) firmly connected to one another form a self-supporting air filter arrangement (1), and are removed together from an intake opening of a fan housing (40), and a plurality of new, firmly connected filter elements (2, 3, 11), which form a self-supporting air filter arrangement (1), are installed in their place.

## Revendications

1. Système d'air frais (33, 38) pour une machine de construction routière (17, 27) se présentant sous la forme d'un finisseur routier (18) ou d'un véhicule d'alimentation (28) pour un finisseur routier (18), comprenant au moins une unité de ventilateur (36, 39) avec un boîtier de ventilateur (40), dans lequel un ensemble formant filtre à air (1) permettant de nettoyer un flux volumique (V) contenant du bitume est fixé au boîtier de ventilateur (40), dans lequel l'ensemble formant filtre à air (1) comprend au moins un premier élément filtrant (2) et un deuxième élément filtrant (3) qui sont agencés en tant qu'éléments filtrants (2, 3) agissant l'un après l'autre afin de nettoyer le flux volumique (V) contenant du bitume, et dans lequel l'ensemble formant filtre à air (1) est fixé de manière amovible à un orifice d'aspiration formé au niveau du boîtier de ventilateur (40), **caractérisé en ce que** le premier élément filtrant (2) et le deuxième élément filtrant (3) sont reliés de manière fixe l'un à l'autre et **en ce que** les éléments filtrants (2, 3, 11) reliés de manière fixe l'un à l'autre forment ensemble un ensemble formant filtre à air (1) autoportant.

2. Système d'air frais selon la revendication 1, **caractérisé en ce que** le premier élément filtrant (2) et le deuxième élément filtrant (3) sont reliés l'un à l'autre par une liaison par complémentarité de matière, par complémentarité de formes et/ou par complémentarité de forces, et sont de manière préférée collés l'un à l'autre.

3. Système d'air frais selon la revendication 1 ou 2, **caractérisé en ce que** le premier élément filtrant (2) et/ou le deuxième élément filtrant (3) présente(nt) un tissu filtrant (7, 8) en forme de zigzag, en forme d'onde, en forme de rectangle, en forme de bouton ou en forme de pyramide.

4. Système d'air frais selon l'une quelconque des revendications précédentes, **caractérisé en ce que** le premier élément filtrant (2) et/ou le deuxième élément filtrant (3) est/sont un filtre à charbon actif.

5. Système d'air frais selon l'une quelconque des revendications précédentes, **caractérisé en ce que** l'ensemble formant filtre à air (1) comprend un troisième élément filtrant (11) sous la forme d'un pré-filtre, qui est relié de manière fixe ou amovible, de manière préférée qui est collé, au premier et au deuxième élément filtrant (2, 3).

6. Système d'air frais selon la revendication 5, **caractérisée en ce que** le troisième élément filtrant (11) présente une surface lisse (12).

7. Système d'air frais selon la revendication 5 ou 6, **caractérisé en ce que** le troisième élément filtrant (11) est un filtre en mousse ou un filtre en non-tissé.

8. Système d'air frais selon l'une quelconque des revendications précédentes, **caractérisé en ce que** les éléments filtrants (2, 3, 11) respectifs se présentent sous la forme de couches filtrantes (S1, S2, S3) superposées.

9. Système d'air frais selon l'une quelconque des revendications précédentes, **caractérisé en ce que** l'ensemble formant filtre à air (1) forme un côté d'entrée (E) et un côté de sortie (A), dans lequel un élément d'étanchéité (15) est prévu sur le côté d'entrée (E) et/ou sur le côté de sortie (A).

10. Système d'air frais selon la revendication 9, **caractérisé en ce que** l'élément d'étanchéité (15) est réalisé sous la forme d'un élément encliquetable pouvant être mis en place sans outil au niveau du boîtier de ventilateur (40).

11. Système d'air frais selon l'une quelconque des revendications précédentes, **caractérisé en ce que** les éléments filtrants (2, 3, 11) reliés de manière fixe les uns aux autres forment ensemble une gaine étanche à l'air (6).

12. Procédé de remplacement d'une pluralité d'éléments filtrants (2, 3, 11) usagés d'un système d'air frais (33, 38) fourni au niveau d'un finisseur routier (18) ou d'un véhicule d'alimentation (28), lesquels éléments filtrants sont utilisés comme éléments filtrants (2, 3, 11) agissant les uns après les autres pour nettoyer un flux volumique (V) contenant du bitume, **caractérisé en ce que** la pluralité d'éléments filtrants (2, 3, 11) usagés sont reliés de manière fixe les uns aux autres, forment ensemble un ensemble formant filtre à air (1) autoportant et sont démontés ensemble à partir d'un orifice d'aspiration formé à travers un boîtier de ventilateur (40), et une pluralité de nouveaux éléments filtrants (2, 3, 11) reliés de manière fixe les uns aux autres et formant ensemble un ensemble formant filtre à air autoportant sont installés à leur place.
